# EUROPEAN PATENT APPLICATION

(11) **EP 4 746 053 A1**
(43) Date of publication of application: **20.05.2026**
(21) Application number: 25212100.9
(22) Date of filing: 29.10.2025
(51) Int. Cl.: H01M 4/04, H01M 10/04

(54) **APPARATUS AND METHOD FOR MANUFACTURING ELECTRODE PLATE**

(30) Priority: 11.11.2024 KR 20240159399
(71) Applicant: SAMSUNG SDI CO., LTD., Yongin-si, Gyeonggi-do 17084 (KR)
(72) Inventor: LEE, Junsub, Yongin-si, Gyeonggi-do 17084 (KR); JUN, Pilgoo, Yongin-si, Gyeonggi-do 17084 (KR)
(74) Representative: Michalski Hüttermann & Partner Patentanwälte mbB

(57) **Abstract**

An apparatus (1) for manufacturing an electrode plate (10) includes a conveying unit (100) configured to convey an electrode plate (10) including a coated portion (11) where an active material is applied to a current collector and a non-coated portion (12) where no active material is applied in one direction, an elongating unit (300) for the non-coated portion (12), the elongating unit (300) including a pair of rollers (350, 360) having a predetermined gap therebetween, the elongating unit (300) elongating the non-coated portion (12) in close contact with respective sides of the non-coated portion (12), a first sensor (400) in front of the elongating unit (300) in a direction of conveyance measuring a first width of the non-coated portion (12) prior to the elongating thereof, and a second sensor (500) at a rear of the elongating unit (300) measuring a second width of the non-coated portion (12) after elongation, wherein the elongating unit (300) compares the first width and the second width to adjust the gap between the pair of rollers (350, 360).

## Description

### BACKGROUND

### 1. Field

The present disclosure relates to an apparatus and method for manufacturing an electrode plate.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Generally, an electrode or an electrode plate of a secondary battery is formed through a series of processes including a mixing process for mixing raw materials of the electrode, a coating process for applying a mixed slurry to a substrate of the electrode plate and drying it, a rolling process for reducing the thickness of the coated electrode, a slitting process for severing the electrode, a notching process for forming a tab on the electrode, etc.

The above information disclosed in this Background section is for enhancement of understanding of the background of the present disclosure, and therefore, it may contain information that does not constitute related (or prior) art.

### SUMMARY

Embodiments include an apparatus for manufacturing an electrode plate, the apparatus including a conveying unit configured to convey an electrode plate including a coated portion where an active material is applied to a current collector and a non-coated portion where no active material is applied to the current collector in one direction, an elongating unit for the non-coated portion, the elongating unit including a pair of rollers having a predetermined gap therebetween, the elongating unit elongating the non-coated portion in close contact with respective sides of the non-coated portion, a first sensor in front of the elongating unit in a direction in which the electrode plate is conveyed, the first sensor measuring a first width of the non-coated portion prior to the elongating thereof, and a second sensor at a rear of the elongating unit in the direction in which the electrode plate is conveyed, the second sensor measuring a second width of the non-coated portion that has been elongated, wherein the elongating unit compares the first width and the second width to adjust the gap between the pair of rollers.

The elongating unit may cause the width of the non-coated portion to increase in a reverse direction of a load applied in a direction perpendicular to the direction the electrode plate is conveyed.

The elongating unit may cause the non-coated portion to become convex downward in the direction perpendicular to the direction in which the electrode plate is conveyed.

The pair of rollers may include a first roller facing convexly toward an upper surface of the non-coated portion, and a second roller facing concavely toward a lower surface of the non-coated portion.

A width of the first roller and a width of the second roller may each be smaller than the first width of the non-coated portion.

The width of each of the first roller and the second roller is about 90 percent of the first width of the non-coated portion.

The elongating unit may include a communication unit configured to receive information on the first width and the second width of the non-coated portion measured by the first sensor and the second sensor, respectively, a calculation unit configured to calculate a rate of increase in the width of the non-coated portion by comparing the first width and the second width of the non-coated portion, a controller configured to control a driving unit to adjust the gap between the first roller and the second roller based on the rate of increase in the width of the non-coated portion, wherein the driving unit adjusts the gap between the first roller and the second roller by moving at least one of the first roller and the second roller vertically.

The driving unit may include a servo hydraulic valve configured to control a hydraulic pressure of a hydraulic cylinder based on a control signal from the controller; and a hydraulic cylinder that vertically moves at least one of the first roller and the second roller based on the hydraulic pressure.

The driving unit may further include a linear motor configured to horizontally move the first roller and the second roller in a width direction of the non-coated portion.

The controller may be further configured to control the driving unit to adjust the predetermined gap between the first roller and the second roller to a first predetermined gap having a preset thickness ratio less than a thickness of the non-coated portion prior to the elongating thereof.

The preset thickness ratio may be about 70 percent to about 80 percent of the thickness of the non-coated portion prior to the elongating thereof.

The controller may be further configured to control the driving unit to adjust the first predetermined gap to a second predetermined gap based on the rate of increase in the width of the non-coated portion so that the rate of increase in the width of the non-coated portion agrees with a preset rate of increase in the width.

The preset rate of increase in the width may be a rate at which the second width of the non-coated portion increases by about 1 percent to about 3 percent compared to the first width thereof.

The apparatus may further include a heating unit in front of the first sensor in the direction in which the electrode plate is conveyed, the heating unit configured to heat the electrode plate, and a rolling unit at the rear of the second sensor in the direction in which the electrode plate is conveyed, the rolling unit configured to roll the electrode plate.

Each of the first sensor and the second sensor may include an image sensor configured to capture the width of the non-coated portion.

Embodiments include a method of manufacturing an electrode plate, the method including conveying an electrode plate including a coated portion where an active material is applied to a current collector and a non-coated portion where no active material is applied thereto in one direction, measuring a first width of the non-coated portion in a direction crossing a direction in which the electrode plate is conveyed, elongating the non-coated portion for a first time through a pair of rollers in close contact with respective sides of the non-coated portion, resulting in an elongated non-coated portion, measuring a second width of the elongated non-coated portion in the direction crossing the direction in which the electrode plate is conveyed, and elongating the non-coated portion for a second time by comparing the first width and the second width of the non-coated portion and adjusting a gap between the pair of rollers.

Each of elongating the non-coated portion for the first time and elongating the non-coated portion for the second time may include elongating the non-coated portion while making the width of the non-coated portion increase in a reverse direction of a load applied in a direction perpendicular to the direction in which the electrode plate is conveyed.

The pair of rollers may include a first roller that faces and is convex toward an upper surface of the non-coated portion and a second roller that faces and is concave toward a lower surface of the non-coated portion.

Elongating the non-coated portion for the first time may include elongating the non-coated portion by adjusting the gap between the pair of rollers to a first gap having a preset thickness ratio, the preset thickness ratio being less than a thickness of the non-coated portion prior to elongating the non-coated portion.

Elongating the non-coated portion for the second time may include elongating the non-coated portion by comparing the first width and the second width of the non-coated portion and adjusting the first gap to a second gap having a preset rate of increase in width.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 shows an apparatus for manufacturing an electrode plate according to an embodiment of the present disclosure;
FIG. 2 is a top view of area A in FIG. 1;
FIG. 3 shows an electrode plate and an elongating unit for a non-coated portion according to an embodiment of the present disclosure;
FIG. 4 shows how a non-coated portion is elongated according to an embodiment of the present disclosure;
FIG. 5 shows a non-coated portion that has not yet been elongated and the non-coated portion that has been elongated according to an embodiment of the present disclosure;
FIG. 6 shows components of an elongating unit for a non-coated portion according to an embodiment of the present disclosure;
FIG. 7 shows how the gap between a first roller and a second roller is controlled according to an embodiment of the present disclosure;
FIG. 8 shows how a first roller and a second roller are horizontally moved according to an embodiment of the present disclosure; and
FIG. 9 shows the sequence of a method of manufacturing an electrode plate according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

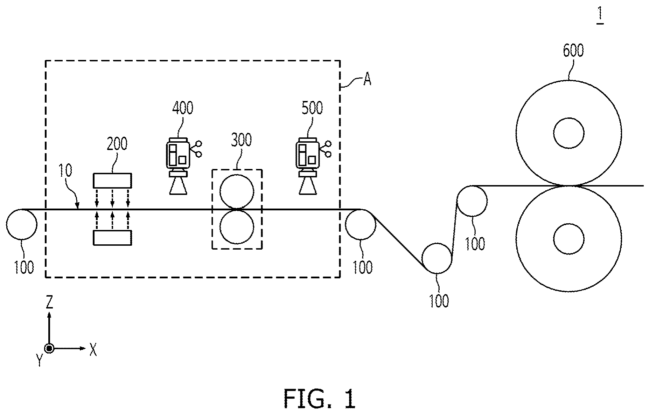

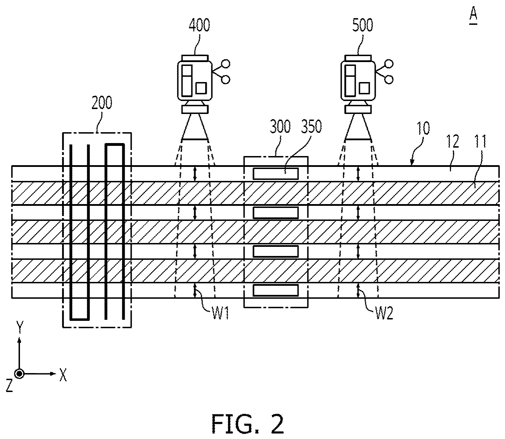

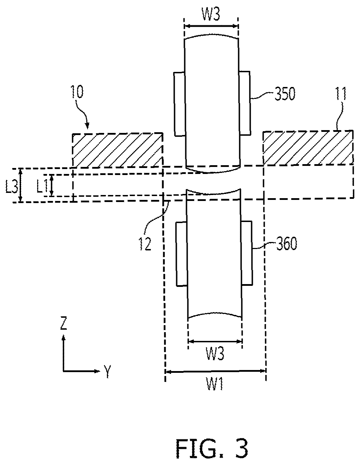

FIG. 1 shows an apparatus for manufacturing an electrode plate according to an embodiment of the present disclosure. FIG. 2 is a top view of area A in FIG. 1. FIG. 3 shows an electrode plate and an elongating unit for a non-coated portion according to an embodiment of the present disclosure.

Referring to FIGS. 1 and 2, an apparatus 1 for manufacturing an electrode plate 10 may include a conveying unit 100 (e.g., a conveyor), a heating unit 200 (e.g., a heater), an elongating unit for a non-coated portion 300 (e.g., an elongator), a first sensor 400, a second sensor 500, and a rolling unit 600 (e.g., a roller).

According to an embodiment, an electrode plate 10 manufactured by the apparatus 1 for manufacturing an electrode plate 10 may include a coated portion 11 where a current collector is coated with an active material and a non-coated portion 12 where the current collector is not coated with the active material. The coated portion 11 may be formed by arranging the active material in a plurality of rows spaced apart from each other on the current collector in a direction in which the electrode plate 10 is conveyed, e.g., the plurality of rows may be spaced apart from each other in a Y-axis direction while extending in an X-axis direction (FIG. 2). The non-coated portion 12 may refer to an area on the current collector where no active material is applied. The non-coated portion 12 may be formed between the coated portions 11 spaced apart from each other in a plurality of rows and at both ends of the electrode plate 10. For example, as shown in FIG. 2, an active material may be applied to the current collector in multiple rows spaced apart from each other in the direction in which the electrode plate 10 is conveyed to form three lines of the coated portion 11. Four lines of the non-coated portion 12 may be formed between the coated portions 11 and at both ends of the electrode plate 10.

According to an embodiment, the electrode plate 10 may be a positive electrode or a negative electrode. When the electrode plate 10 is a positive electrode, it may include the coated portion 11 formed by applying an active material such as a transition metal oxide to a current collector formed on a metal foil such as aluminum or an aluminum alloy. The non-coated portion 12 where no active material is applied may be formed at both ends (e.g., left and right sides) of the electrode plate 10. When the electrode plate 10 is a negative electrode, it may include the coated portion 11 formed by applying an active material such as graphite and carbon to a current collector formed on a metal foil such as copper, a copper alloy, nickel, and a nickel alloy. The non-coated portion 12 where no active material is applied may be formed at both ends of the electrode plate 10.

According to an embodiment, in one direction, i.e., the X direction, the conveying unit 100 may convey the electrode plate 10 including the coated portion 11 where an active material is applied to the current collector and the non-coated portion 12 where an active material is not applied to the current collector. For example, the conveying unit 100 may include a plurality of conveying rollers connected to a driving motor to convey the electrode plate 10 in one direction. The conveying rollers may be spiral rollers, but the conveying unit 100 may be formed as a conveyor belt connected to a driving motor to carry the coated electrode plate 10 in one direction, but the particular way the electrode plate 10 is conveyed may vary.

According to an embodiment, the heating unit 200 may be positioned in front of the first sensor 400 at a predetermined distance in the direction in which the electrode plate 10 is conveyed, i.e., the X-axis direction. The heating unit 200 may heat the electrode plate 10. The heating unit 200 may heat the electrode plate 10 so that the elongation of the non-coated portion 12, i.e., the elongation of the current collector, may be improved. The heating unit 200 may be a near infrared (NIR) heater, but any device can be applied as long as the non-coated portion 12 of the electrode plate 10 can be sufficiently heated to be elongated well.

According to an embodiment, as shown in FIG. 3, the elongating unit 300 for the non-coated portion 12 may include a pair of rollers 350 and 360 with a predetermined distance therebetween, and the pair of rollers 350 and 360 may be in close contact with their respective sides of the non-coated portion 12 to elongate the non-coated portion 12. For example, while the electrode plate 10 is conveyed, the non-coated portion 12 may be elongated while passing between the pair of rollers 350 and 360 of the elongating unit 300 for the non-coated portion 12.

According to an embodiment, the elongating unit 300 for the non-coated portion 12 may include at least one pair of rollers 350 and 360. The elongating unit 300 for the non-coated portion 12 may include at least one pair of rollers 350 and 360 corresponding to each line of the non-coated portion 12. For example, as shown in FIG. 2, a pair of rollers 350 and 360 may be arranged corresponding to each of the four lines of the non-coated portion 12.

According to an embodiment, the elongating unit 300 for the non-coated portion 12 may receive information on a first width W1 (e.g., in the Y-axis direction) of the non-coated portion 12, that has yet to be elongated, from the first sensor 400 and information on a second width W2 of the non-coated portion 12 that has been elongated from the second sensor 500. The elongating unit 300 for the non-coated portion 12 may adjust the gap between the pair of rollers 350 and 360 by comparing the first width W1 and the second width W2 of the non-coated portion 12. That is, the elongating unit 300 for the non-coated portion 12 may adjust the gap between the pair of rollers 350 and 360 through a feedback control.

According to an embodiment, the first sensor 400 may measure the first width W1 of the non-coated portion 12 that has yet to be elongated. The first sensor 400 may be placed in front of the elongating unit 300 for the non-coated portion 12 in the direction in which the electrode plate 10 is carried. The first sensor 400 may measure the first width W1 of the non-coated portion 12 and transmit information on the first width W1 of the non-coated portion 12 to the elongating unit 300 for the non-coated portion 12. For another example, the first sensor 400 may capture the first width W1 of the non-coated portion 12 to form an image thereof and transmit the image to the elongating unit 300 for the non-coated portion 12.

According to an embodiment, the second sensor 500 may measure the second width W2 of the non-coated portion 12 that has been elongated. The second sensor 500 may be placed at the rear of the elongating unit 300 for the non-coated portion 12 in the direction in which the electrode plate 10 is carried (e.g., conveyed). The second sensor 500 may measure the second width W2 of the non-coated portion 12 and transmit information on the second width W2 of the non-coated portion 12 to the elongating unit 300 for the non-coated portion 12. As another example, the second sensor 500 may capture the second width W2 of the non-coated portion 12 to form an image thereof and transmit the image to the elongating unit 300 for the non-coated portion 12.

According to an embodiment, each of the first sensor 400 and the second sensor 500 may include an image sensor that captures the width of the non-coated portion 12. For example, the image sensor may include a charge-coupled device (CCD) sensor, a complementary metal oxide semiconductor (CMOS) sensor, etc., but any device capable of capturing the width of the non-coated portion 12 can be applied.

According to an embodiment, the rolling unit 600 may roll the electrode plate 10. The rolling unit 600 may include a pair of rollers, and the pair of rollers may face their respective sides of the electrode plate 10 (e.g., top and bottom sides in the orientation of FIG. 1) and roll the electrode plate 10. The rolling unit 600 may be positioned at the rear of the second sensor 500 at a predetermined distance in the direction in which the electrode plate 10 is conveyed. The rolling unit 600 may roll the coated portion 11 and the non-coated portion 12, which has been elongated, of the electrode plate 10. During the rolling process, wrinkles may be formed on the non-coated portion 12 due to a difference in an elongation rate between the coated portion 11 and the non-coated portion 12, but the width of the non-coated portion 12 may be elongated in advance so that wrinkles may not be formed on the non-coated portion 12.

Referring to FIG. 3, the elongating unit 300 for the non-coated portion 12 may include a pair of rollers 350 and 360, which are arranged for each line of the non-coated portion 12 along a path in which the electrode plate 10 is carried. The pair of rollers 350 and 360 may be placed only on the non-coated portion 12 while spaced apart from the coated portion 11. The non-coated portion 12 of the electrode plate 10 may be stretched while passing between the pair of rollers 350 and 360.

According to an embodiment, the pair of rollers 350 and 360 may include a first roller 350 that faces and is convex toward the upper surface of the non-coated portion 12 and a second roller 360 that faces and is concave toward the lower surface of the non-coated portion 12 (e.g., a roller above and below the electrode plate 10 in the orientation shown in FIG. 1).

According to an embodiment, the first roller 350 and the second roller 360 may have the same width W3 (e.g., in the Y-axis direction). In order for the first roller 350 and the second roller 360 to be placed only on the non-coated portion 12, the width W3 of the first roller 350 and the second roller 360 may be smaller than the first width W1 of the non-coated portion. For example, the width W3 of the first roller 350 and the second roller 360 may be around 90 percent of the first width W1 of the non-coated portion, but the width W3 may vary.

According to an embodiment, a first gap L1 (e.g., in the Z-axis direction) between the first roller 350 and the second roller 360 may be adjusted to be smaller than a thickness L3 (e.g., in the Z-axis direction) of the non-coated portion, i.e., a thickness of the current collector, so that the non-coated portion 12 may be pressed and stretched while passing between the first roller 350 and the second roller 360. The first gap L1 between the first roller 350 and the second roller 360 may be about 70 percent to about 80 percent of the thickness L3 of the non-coated portion 12. For example, when the thickness of the non-coated portion 12 is 10 µm, the first gap L1 between the first roller 350 and the second roller 360 may be adjusted to be 7 µm to 8 µm.

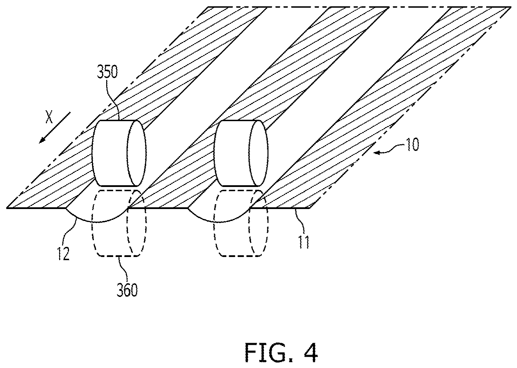

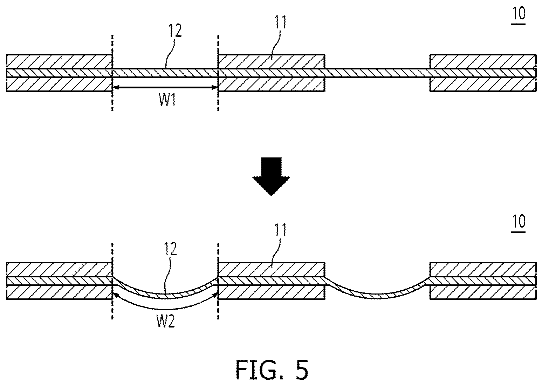

FIG. 4 shows how a non-coated portion is elongated according to an embodiment of the present disclosure. FIG. 5 shows a non-coated portion that has not yet been elongated and the non-coated portion that has been elongated according to an embodiment of the present disclosure.

Referring to FIGS. 4 and 5, the elongating unit 300 for the non-coated portion 12 may elongate the non-coated portion 12, making the width of the non-coated portion 12 increase in a reverse direction of a load applied in a direction perpendicular to the direction in which the electrode plate 10 is conveyed (e.g., the Z-axis direction). The elongating unit 300 for the non-coated portion 12 may elongate the non-coated portion 12, making the non-coated portion 12 become convex downward in a direction perpendicular to the direction in which the electrode plate 10 is conveyed.

Specifically, as illustrated in FIG. 4, the first roller 350 and the second roller 360 of the elongating unit 300 for the non-coated portion 12 may be disposed for each line of the non-coated portion 12 along the path in which the electrode plate 10 is conveyed, i.e., the X-axis direction. The first roller 350 may face the upper surface of the non-coated portion 12, and the second roller 360 may face the lower (e.g., opposite) surface of the non-coated portion 12. As shown in FIG. 3, the first roller 350 may face the upper surface of the non-coated portion 12 and may be convex toward the upper surface of the non-coated portion 12. The second roller 360 may face the lower surface of the non-coated portion 12 and may be concave toward the lower surface of the non-coated portion 12. As the non-coated portion 12 is stretched while passing between the first roller 350 with a convex surface and the second roller 360 with a concave surface, it may be stretched to be convex downward in the direction perpendicular to the direction in which the electrode plate 10 is conveyed (e.g., the Z-axis direction).

As shown in FIG. 5, the second width W2 of the non-coated portion 12 that has been elongated may be larger than the first width W1 of the non-coated portion 12 that has yet to be elongated. The second width W2 of the non-coated portion 12 may be stretched more as the gap between the first roller 350 and the second roller 360 becomes narrower.

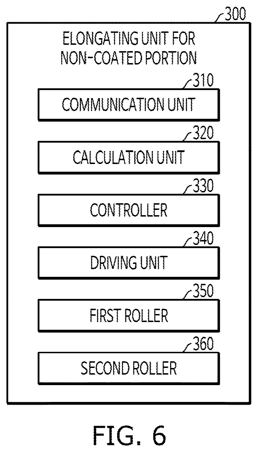

FIG. 6 shows components of an elongating unit for a non-coated portion according to an embodiment of the present disclosure.

Referring to FIG. 6, the elongating unit 300 for the non-coated portion 12 may include a communication unit 310, a calculation unit 320, a controller 330, a driving unit 340, the first roller 350, and the second roller 360.

According to an embodiment, the communication unit 310 may be a device capable of communicating with other components of the apparatus for manufacturing an electrode plate 10 through wires and/or wirelessly. The communication unit 310 may receive the information on the first width W1 of the non-coated portion 12 that has yet to be elongated and the second width W2 of the non-coated portion 12 that has been elongated, which have been measured by the first sensor 400 and the second sensor 500, respectively. For example, the communication unit 310 may receive information on the length of the first width W1 of the non-coated portion 12 and information on the length of the second width W2 of the non-coated portion 12 from the first sensor 400 and the second sensor 500, respectively. As another example, the communication unit 310 may receive an image of the first width W1 of the non-coated portion 12 and an image of the second width W2 of the non-coated portion 12 from the first sensor 400 and the second sensor 500, respectively.

According to an embodiment, the calculation unit 320 may calculate the rate of increase in the width of the non-coated portion 12 by comparing the first width W1 of the non-coated portion 12 that has yet to be elongated and the second width W2 of the non-coated portion 12 that has been elongated. For example, the calculation unit 320 may calculate the rate of increase in the width of the non-coated portion 12 based on the information on the lengths of the first width W1 and the second width W2 of the non-coated portion 12, which has been transmitted by the communication unit 310. As another example, the calculation unit 320 may calculate the lengths of the first width W1 and the second width W2 of the non-coated portion 12 based on the images of the first width W1 and the second width W2 of the non-coated portion 12, which have been transmitted by the communication unit 310, and may calculate the rate of increase in the width of the non-coated portion 12.

According to an embodiment, the controller 330 may control the operation of the driving unit 340. The controller 330 may control the operation of the driving unit 340 to adjust the gap between the first roller 350 and the second roller 360 based on the rate of increase in the width of the non-coated portion 12.

According to an embodiment, the controller 330 may control the operation of the driving unit 340 to move the first roller 350 and the second roller 360 in a horizontal direction intersecting the direction in which the electrode plate 10 is carried. For example, the controller 330 may control the operation of the driving unit 340 to horizontally move the first roller 350 and the second roller 360, making the first roller 350 and the second roller 360 come in contact only with the non-coated portion 12 while not overlapping the coated portion 11.

According to an embodiment, the driving unit 340 may adjust the gap between the first roller 350 and the second roller 360 by moving at least one of the first roller 350 and the second roller 360 vertically. The driving unit 340 may adjust the gap between the first roller 350 and the second roller 360 based on a control signal of the controller 330.

According to an embodiment, the driving unit 340 may include a hydraulic valve for controlling the hydraulic pressure of a hydraulic cylinder based on a control signal of the controller 330 and a hydraulic cylinder for moving at least one of the first roller 350 and the second roller 360 vertically based on the hydraulic pressure, but any device capable of moving the first roller 350 and the second roller 360 vertically can be applied. For example, the driving unit 340 may receive a control signal from the controller 330 to adjust the gap between the first roller 350 and the second roller 360 to a first gap. The hydraulic valve of the driving unit 340 may move the first roller 350 and the second roller 360 vertically by adjusting the hydraulic pressure of the hydraulic cylinder to a hydraulic pressure corresponding to the first gap. The first roller 350 and the second roller 360, which have been moved vertically, may be arranged with the first gap.

According to an embodiment, the driving unit 340 may further include a linear motor capable of horizontally moving the first roller 350 and the second roller 360 in a width direction of the non-coated portion 12, but any device capable of horizontally moving the first roller 350 and the second roller 360 can be applied. The driving unit 340 may horizontally move the first roller 350 and the second roller 360 based on a control signal of the controller 330, making the first roller 350 and the second roller 360 come into contact only with the non-coated portion 12 while not overlapping the coated portion 11.

According to an embodiment, the first roller 350 may face the upper surface of the non-coated portion 12. The first roller 350 may be convex toward the upper surface of the non-coated portion 12. The second roller 360 may face the lower surface of the non-coated portion 12. The second roller 360 may be concave toward the lower surface of the non-coated portion 12. The first roller 350 and the second roller 360 may be connected to the driving unit 340 and move vertically and horizontally by power supplied by the driving unit 340. The first roller 350 and the second roller 360 may be arranged with a gap narrower than the thickness of the non-coated portion 12, and the non-coated portion 12 may be pressed and elongated while passing between the first roller 350 and the second roller 360.

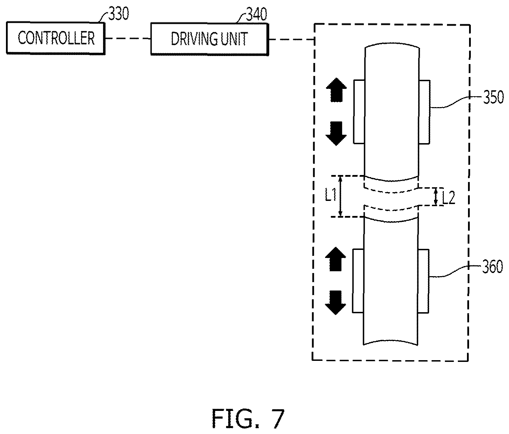

FIG. 7 shows how the gap between a first roller and a second roller is controlled according to an embodiment of the present disclosure.

Referring to FIG. 7, the controller 330 may control the operation of the driving unit 340. The driving unit 340 may be connected to at least one of the first roller 350 and the second roller 360, and may vertically move at least one of the first roller 350 and the second roller 360 based on a control signal of the controller 330.

According to an embodiment, the controller 330 may control the driving unit 340 to adjust the gap between the first roller 350 and the second roller 360 to the first gap L1 having a preset thickness ratio less than the thickness of the non-coated portion 12 based on the thickness of the non-coated portion 12 that has not yet been elongated, i.e., the thickness of the current collector. The thickness of the non-coated portion 12 may be input through an external interface or transmitted through a communication unit such as 310 in FIG. 6, but other scenarios are possible. The preset thickness ratio may be set to a ratio of about 70 percent to about 80 percent of the thickness of the non-coated portion 12, but the preset thickness ratio may vary. The driving unit 340 may adjust the gap between the first roller 350 and the second roller 360 to the first gap by vertically moving at least one of the first roller 350 and the second roller 360 based on a first control signal of the controller 330, i.e., a signal for controlling the first roller 350 and the second roller 360 to be disposed with the first gap L1. For example, when the thickness of the non-coated portion 12, i.e., the thickness of the current collector, is 10 µm, the controller 330 may control the operation of the driving unit 340 to make the first roller 350 and the second roller 360 have the first gap L1 of 7 µm to 8 µm therebetween.

According to an embodiment, the controller 330 may control the operation of the driving unit 340 to adjust the first gap L1 to a second gap L2 based on the rate of increase in the width of the non-coated portion 12 so that the rate of increase in the width agrees with a preset rate. As described with reference to FIG. 6, the rate of increase in the width may be calculated by the calculation unit 320. The preset rate of increase in the width may be a rate at which the second width of the non-coated portion increases by about 1 percent to about 3 percent compared to the first width thereof, but the preset rate of increase may vary. The driving unit 340 may adjust the gap between the first roller 350 and the second roller 360 to the second gap by vertically moving at least one of the first roller 350 and the second roller 360 based on a second control signal of the controller 330, i.e., a signal for controlling the first roller 350 and the second roller 360 to be disposed with the second gap L2. That is, the controller 330 may perform a feedback control to adjust the gap between the first roller 350 and the second roller 360 by comparing the width W1 of the non-coated portion 12 that has yet to be elongated and the width W2 of the non-coated portion 12 that has been elongated.

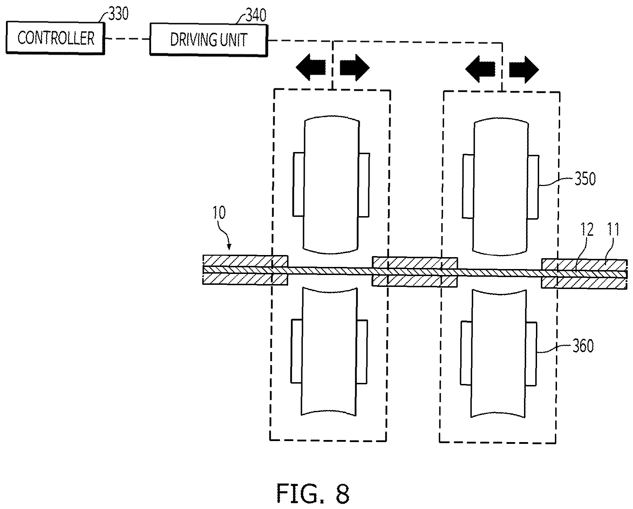

FIG. 8 shows how a first roller and a second roller are horizontally moved according to an embodiment of the present disclosure.

Referring to FIG. 8, the controller 330 according to an embodiment may control the operation of the driving unit 340 to move the first roller 350 and the second roller 360 in a horizontal direction intersecting the direction in which the electrode plate 10 is carried. The driving unit 340 may be connected to the first roller 350 and the second roller 360, and may horizontally move the first roller 350 and the second roller 360 based on a control signal of the controller 330. For example, the controller 330 may control the operation of the driving unit 340 to horizontally move the first roller 350 and the second roller 360, making the first roller 350 and the second roller 360 come into contact only with the non-coated portion 12 while not overlapping the coated portion 11.

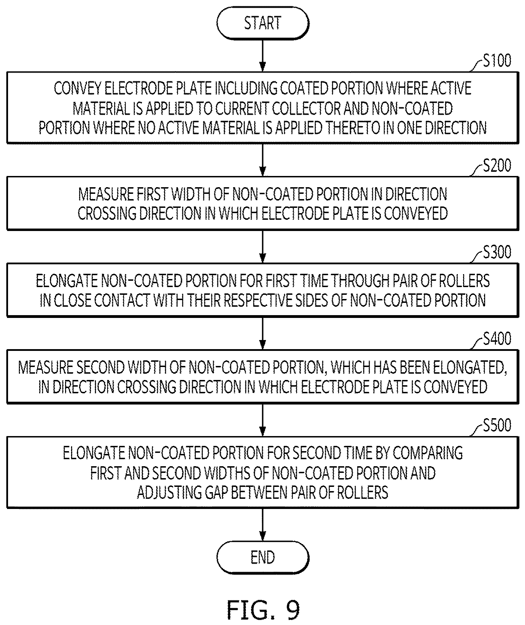

FIG. 9 shows the sequence of a method of manufacturing an electrode plate according to an embodiment of the present disclosure.

Referring to FIG. 9, a method of manufacturing an electrode plate according to an embodiment of the present disclosure may include conveying an electrode plate including a coated portion where an active material is applied to a current collector and a non-coated portion where no active material is applied thereto in one direction at S 100, measuring a first width of the non-coated portion in a direction crossing (or intersecting) a direction in which the electrode plate is conveyed at S200, elongating the non-coated portion for a first time through a pair of rollers in close contact with their respective sides of the non-coated portion at S300, measuring a second width of the non-coated portion, which has been elongated, in the direction crossing the direction in which the electrode plate is conveyed at S400, and elongating the non-coated portion for a second time by comparing the first width and the second width of the non-coated portion and adjusting the gap between the pair of rollers at S500. Hereinafter, S100 to S500 will be described in detail with reference to FIGS. 1 to 5.

At S 100, the conveying unit 100 may convey the electrode plate 10 including the coated portion 11 where an active material is applied to a current collector and the non-coated portion 12 where no active material is applied thereto in one direction, i.e., an X-axis direction. The coated portion 11 may be formed by arranging the active material in a plurality of rows spaced apart from each other on the current collector in the direction in which the electrode plate 10 is conveyed, i.e., the X-axis direction. The non-coated portion 12 may refer to an area on the current collector where no active material is applied. The non-coated portion 12 may be formed between the coated portions 11 spaced apart from each other in a plurality of rows and at both ends of the electrode plate 10. For example, the conveying unit 100 may include a plurality of conveying rollers connected to a driving motor to convey the electrode plate 10 in one direction. The conveying rollers may be spiral rollers, but other types of rollers are possible. As another example, the conveying unit 100 may be formed as a conveyor belt connected to a driving motor to carry the coated electrode plate 10 in one direction, but the conveying unit 100 may vary.

S100 may further include heating the electrode plate 10 through the heating unit 200. The heating unit 200 may be positioned in front of the first sensor 400 at a predetermined distance in the direction in which the electrode plate 10 is conveyed, i.e., the X-axis direction. The heating unit 200 may heat the electrode plate 10 so that the elongation of the non-coated portion 12, i.e., the elongation of the current collector, may be improved. The heating unit 200 may be a near infrared (NIR) heater, but any device can be applied as long as the non-coated portion 12 of the electrode plate 10 can be sufficiently heated to be elongated well.

At S200, the first sensor 400 may measure the first width W1 of the non-coated portion 12 in the direction intersecting the direction in which the electrode plate 10 is carried (e.g., the Z-axis direction). The first sensor 400 may measure the first width W1 of the non-coated portion 12 that has yet to be elongated. The first sensor 400 may be placed in front of the elongating unit 300 for the non-coated portion 12 in the direction in which the electrode plate 10 is carried. The first sensor 400 may measure the first width W1 of the non-coated portion 12 and transmit information on the first width W1 of the non-coated portion 12 to the elongating unit 300 for the non-coated portion 12. As another example, the first sensor 400 may capture the first width W1 of the non-coated portion 12 to form an image thereof and transmit the image to the elongating unit 300 for the non-coated portion 12.

At S300, the elongating unit 300 for the non-coated portion 12 may include the pair of rollers 350 and 360 with a predetermined gap therebetween, and the pair of rollers 350 and 360 may elongate the non-coated portion 12 for the first time in close contact with their respective sides of the non-coated portion 12. For example, in the process of conveying the electrode plate 10, the non-coated portion 12 may be elongated for the first time while passing between the pair of rollers 350 and 360 of the elongating unit 300 for the non-coated portion 12. The pair of rollers 350 and 360 may include the first roller 350 that faces and is convex toward the upper surface of the non-coated portion 12 and the second roller 360 that faces and is concave toward the lower surface of the non-coated portion 12.

S300 may include elongating the non-coated portion 12 while making the width of the non-coated portion 12 increase in a reverse direction of a load applied in a direction perpendicular to the direction in which the electrode plate 10 is conveyed (e.g., the Z-axis direction). As the non-coated portion 12 is stretched while passing between the first roller 350 with a convex surface and the second roller 360 with a concave surface, it may be stretched to be convex downward in the direction perpendicular to the direction in which the electrode plate 10 is conveyed.

S300 may include elongating the non-coated portion 12 for the first time through the elongating unit 300 for the non-coated portion 12 in order to adjust the gap between the pair of rollers 350 and 360 to the first gap L1 having a preset thickness ratio less than the thickness L3 of the non-coated portion 12 based on the thickness L3 of the non-coated portion 12 that has not yet been elongated. The preset thickness ratio may be set to a ratio of about 70 percent to about 80 percent of the thickness L3 of the non-coated portion 12, but the ratio may vary. For example, when the thickness of the non-coated portion 12, i.e., the thickness of the current collector, is 10 µm, the elongating unit 300 for the non-coated portion 12 may move the first roller 350 and the second roller 360 vertically to make the first roller 350 and the second roller 360 have the first gap L1 of 7 µm to 8 µm therebetween.

At S400, the second sensor 500 may measure the second width W2 of the non-coated portion 12 that has been elongated in the direction intersecting the direction in which the electrode plate 10 is carried. The second sensor 500 may measure the second width W2 of the non-coated portion 12 that has been elongated. The second sensor 500 may measure the second width W2 of the non-coated portion 12 and transmit information on the second width W2 of the non-coated portion 12 to the elongating unit 300 for the non-coated portion 12. As another example, the second sensor 500 may capture the second width W2 of the non-coated portion 12 to form an image thereof and transmit the image to the elongating unit 300 for the non-coated portion 12.

At S500, the calculation unit 320 may elongate the non-coated portion 12 for the second time by comparing the first width W1 and the second width W2 of the non-coated portion 12 and adjusting the gap between the pair of rollers 350 and 360. The elongating unit 300 for the non-coated portion 12 may receive the information on the first width W1 of the non-coated portion 12 that has yet to be elongated from the first sensor 400 and the information on the second width W2 of the non-coated portion 12 that has been elongated from the second sensor 500. The elongating unit 300 for the non-coated portion 12 may elongate the non-coated portion 12 for the second time by comparing the first width W1 and the second width W2 of the non-coated portion 12 and adjusting the gap between the pair of rollers 350 and 360. That is, the elongating unit 300 for the non-coated portion 12 may adjust the gap between the pair of rollers 350 and 360 through a feedback control.

S500 may include elongating the non-coated portion 12 while making the width of the non-coated portion 12 increase in the reverse direction of the load applied in the direction perpendicular to the direction in which the electrode plate 10 is conveyed. As the non-coated portion 12 is stretched while passing between the first roller 350 with the convex surface and the second roller 360 with the concave surface, it may be stretched to be convex downward in the direction perpendicular to the direction in which the electrode plate 10 is conveyed.

S500 may include elongating the non-coated portion 12 through the elongating unit 300 for the non-coated portion 12 by comparing the first width W1 and the second width W2 of the non-coated portion 12 and adjusting the first gap L1 between the pair of rollers 350 and 360 to the second gap L2 to match up the rate of increase in the width of the non-coated portion 12 with a preset rate of increase in the width. The preset rate of increase in the width may be a rate at which the second width W2 of the non-coated portion 12 increases by about 1 percent to about 3 percent compared to the first width W1 thereof, but the preset rate of increase may vary.

In other words, the elongating unit 300 for the non-coated portion 12 may perform a feedback control to adjust the gap between the first roller 350 and the second roller 360 by comparing the width W1 of the non-coated portion 12 that has yet to be elongated and the width W2 of the non-coated portion 12 that has been elongated.

The methods, processes, and/or operations described herein may be performed by code or instructions to be executed by a computer, processor, controller, or other signal processing device. For example, the communication unit 310, calculation unit 320 and the controller 330 may be one or more computing devices, e.g., a workstation computer, a desktop computer, a laptop computer, a tablet computer, or the like, and may be implemented as a simple controller, a complex processor, e.g., a microprocessor, a central processing unit (CPU), a graphics processing unit (GPU) etc., or a processor composed of software, dedicated hardware or firmware, or the like. The computer, processor, controller, or other signal processing device may be those described herein or one in addition to the elements described herein.

When continuously rolling an electrode plate using a roll during a rolling process, there is a problem in that wrinkles, etc. may be formed in an area where no active material is applied to a current collector due to differences in thickness, elongation, etc. between an area where an active material is applied to the current collector and the area where no active material is applied thereto.

According to some embodiments of the present disclosure, a non-coated portion of a strip-shaped electrode plate on which an active material is applied to a current collector in a plurality of rows may be elongated in advance, thereby preventing wrinkles formed on the non-coated portion during a rolling process.

According to some embodiments of the present disclosure, wrinkles formed on a non-coated portion may be prevented so that the efficiency of a process of manufacturing an electrode plate may be improved.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An apparatus (1) for manufacturing an electrode plate, the apparatus (1) comprising:
a conveying unit (100) configured to convey an electrode plate (10) in one direction, wherein the electrode plate (12) includes a coated portion (11) where an active material is applied to a current collector and a non-coated portion (12) where no active material is applied to the current collector;
an elongating unit (300) for the non-coated portion (12), the elongating unit (300) including a pair of rollers (350, 360) having a predetermined gap therebetween, the elongating unit (300) configured for elongating the non-coated portion (12) in close contact with respective sides of the non-coated portion (12);
a first sensor (400), the first sensor (400) being arranged with regard to the direction in which the electrode plate (10) is conveyed in front of the elongating unit (300), the first sensor (400) configured for measuring a first width (W1) of the non-coated portion (12) prior to the elongating thereof; and
a second sensor (500), the second sensor (500) being arranged with regard to the direction in which the electrode plate (10) is conveyed at behind the elongating unit (300), the second sensor (500) configured for measuring a second width (W2) of the non-coated portion (12) that has been elongated,
wherein the elongating unit (300) is configured for comparing the first width (W1) and the second width (W2) and for adjusting the predetermined gap between the pair of rollers.

2. The apparatus (1) as claimed in claim 1, wherein the elongating unit (300) is configured for increasing the second width (W2) of the non-coated portion (12) in a reverse direction of a load applied in a direction perpendicular to the direction the electrode plate (10) is conveyed.

3. The apparatus (1) as claimed in any of claims 1 or 2, wherein the elongating unit (300) is configured for causing the non-coated portion (12) to become convex downward in a direction perpendicular to the direction in which the electrode plate (10) is conveyed.

4. The apparatus (1) as claimed in any of the previous claims, wherein the pair of rollers (350, 360) includes:
a first roller (350) comprising a convex rolling surface that faces towards an upper surface of the non-coated portion (12), and
a second roller (360) comprising a concave rolling surface that faces towards a lower surface of the non-coated portion (12).

5. The apparatus (1) as claimed in claim 4, wherein a width of the first roller (350) and a width of the second roller (360) are each smaller than the first width (W1) of the non-coated portion (12).

6. The apparatus (1) as claimed in any of claims 4 or 5, wherein the elongating unit (300) comprises:
a communication unit (310) configured to receive information on the first width (W1) and the second width (W2) of the non-coated portion (12) measured by the first sensor (400) and the second sensor (500), respectively;
a calculation unit (320) configured to calculate a rate of increase in a width of the non-coated portion (12) by comparing the first width (W1) and the second width (W2) of the non-coated portion (12);
a controller (330) configured to control a driving unit (340) to adjust the gap between the first roller (350) and the second roller (360) based on the rate of increase in the width of the non-coated portion (12),
wherein the driving unit (340) is configured for adjusting the predetermined gap between the first roller (350) and the second roller (360) by moving at least one of the first roller (350) and the second roller (360) vertically.

7. The apparatus (1) as claimed in claim 6, wherein the driving unit (340) comprises:
a servo hydraulic valve configured to control a hydraulic pressure of a hydraulic cylinder based on a control signal from the controller (330); and
a hydraulic cylinder configured for moving at least one of the first roller (350) and the second roller (360) based on the hydraulic pressure.

8. The apparatus (1) as claimed in any of claims 6 or 7, wherein the driving unit (340) further comprises a linear motor configured to horizontally move the first roller (350) and the second roller (360) in a width direction of the non-coated portion (12).

9. The apparatus (1) as claimed in any of claims 6 to 8, wherein the controller (330) is further configured to control the driving unit (340) to adjust the predetermined gap between the first roller (350) and the second roller (360) to a first predetermined gap having a preset thickness ratio less than a thickness of the non-coated portion (11) prior to the elongating thereof.

10. The apparatus (1) as claimed in claim 9, wherein the controller (330) is further configured to control the driving unit (340) to adjust the first predetermined gap to a second predetermined gap based on the rate of increase in the width of the non-coated portion (12) so that the rate of increase in the width of the non-coated portion (12) agrees with a preset rate of increase in the width.

11. The apparatus (1) as claimed in any of the previous claims, further comprising:
a heating unit (200) the heating unit (200) being arranged with regard to the direction in which the electrode plate (10) is conveyed in front of the first sensor (400), the heating unit (200) configured for heating the electrode plate (10); and
a rolling unit (600) the rolling unit (600) being arranged with regard to the direction in which the electrode plate (10) is conveyed behind the second sensor (500), the rolling unit (600) configured for rolling the electrode plate (10).

12. A method of manufacturing an electrode plate (10), the method preferably being performed by an apparatus (1) configured according to any of the previous claims, the method comprising:
conveying an electrode plate (10) including a coated portion (11) where an active material is applied to a current collector and a non-coated portion (12) where no active material is applied thereto in one direction;
measuring a first width (W1) of the non-coated portion (12) in a direction crossing the direction in which the electrode plate (10) is conveyed;
elongating the non-coated portion (12) for a first time through a pair of rollers (350, 360) in close contact with respective sides of the non-coated portion (12), resulting in an elongated non-coated portion (12);
measuring a second width (W2) of the elongated non-coated portion (12) in the direction crossing the direction in which the electrode plate (10) is conveyed; and
elongating the non-coated portion (12) for a second time by comparing the first width (W1) and the second width (W2) of the non-coated portion (12) and adjusting a gap between the pair of rollers.

13. The method as claimed in claim 12, wherein each of elongating the non-coated portion (12) for the first time and elongating the non-coated portion (12) for the second time includes elongating the non-coated portion (12) by increasing the width of the non-coated portion (12) in a reverse direction of a load applied in a direction perpendicular to the direction in which the electrode plate (10) is conveyed.

14. The method as claimed in any of claims 12 or 13, wherein the method comprises the step
heating the electrode plate (10) with a heating unit (200) before measuring the first width (W1) and/or
rolling the electrode plate (10) with a rolling unit (600) after elongating the non-coated portion (12) for a second time.

15. The method as claimed in any of claims 12 to 14, wherein elongating the non-coated portion (12) for the first time includes elongating the non-coated portion (12) by adjusting the gap between the pair of rollers to a first gap having a preset thickness ratio, the preset thickness ratio being less than a thickness of the non-coated portion (12) prior to elongating the non-coated portion (12), and
elongating the non-coated portion (12) for the second time includes elongating the non-coated portion (12) by comparing the first width (W1) and the second width (W2) of the non-coated portion (12) and adjusting the first gap to a second gap having a preset rate of increase in width.
